# EUROPEAN PATENT SPECIFICATION

(11) **EP 2 022 757 B1**
(45) Date of publication and mention of the grant of the patent: **29.07.2015**
(21) Application number: 07743248.2
(22) Date of filing: 07.05.2007
(51) Int. Cl.: C01B 15/023, B01J 21/04, B01J 21/12

(54) **PROCESS FOR HYDROGEN PEROXIDE PRODUCTION INCLUDING STEP FOR REGENERATION OF WORKING SOLUTION**
VERFAHREN ZUR HERSTELLUNG VON WASSERSTOFFPEROXID MIT EINEM SCHRITT DER REGENERATION VON ARBEITSLÖSUNG
PROCÉDÉ DE PRODUCTION DE PEROXYDE D'HYDROGÈNE COMPRENANT UNE ÉTAPE DE RÉGÉNÉRATION DE LA SOLUTION DE TRAVAIL

(30) Priority: 09.05.2006 JP 2006129860
(43) Date of publication of application: 11.02.2009
(73) Proprietor: MITSUBISHI GAS CHEMICAL COMPANY, INC., Chiyoda-ku, Tokyo 100-8324 (JP)
(72) Inventor: SAKAITANI, Hisashi, Kamisu-shi, Ibaraki 314-0102 (JP); IURA, Katsuhiro, Kamisu-shi, Ibaraki 314-0102 (JP); HAGIWARA, Isao, Kamisu-shi, Ibaraki 314-0102 (JP); MATSUI, Tsutomu, Kamisu-shi, Ibaraki 314-0102 (JP); KITADA, Daisuke, Kamisu-shi, Ibaraki 314-0102 (JP)
(74) Representative: Maiwald, Walter
(86) International application number: PCT/JP2007/059813
(87) International publication number: WO 2007/129769

(56) References cited:
- GB-A- 1 059 317
- GB-A- 1 417 565
- JP-A- 09 278 419
- JP-A- 09 278 420
- JP-A- 48 062 699
- JP-A- 2000 509 701
- US-A- 6 103 917

## Description

### TECHNICAL FIELD

The present invention relates to a method for producing hydrogen peroxide by reducing and oxidizing, repeatedly, a working solution containing, as anthraquinone substances, anthraquinone having an alkyl substituent (hereinafter, occasionally referred to simply as "anthraquinone") and 5,6,7,8-tetrahydroanthraquinone having an alkyl substituent (hereinafter, occasionally referred to simply as "tetrahydroanthraquinone"). In more detail, the present invention relates to a method for producing hydrogen peroxide capable of efficiently removing an inert substance, generated as a sub product by the production of hydrogen peroxide, from the working solution.

### BACKGROUND ART

### <Overview of a method for producing hydrogen peroxide using an anthraquinone technique>

In general, anthraquinone or tetrahydroanthraquinone (hereinafter, occasionally referred to as an "anthraquinone substance") is used as being dissolved in an appropriate organic solvent. An organic solvent is used independently or as a mixture. Usually, a mixture of two types of organic solvents is used. A solution prepared by dissolving an anthraquinone substance in an organic solvent is called a "working solution".

An anthraquinone technique is known as a method for producing hydrogen peroxide for industrial use. According to this method, an anthraquinone substance is dissolved in an organic solvent to obtain a working solution, and the anthraquinone substance is reduced by hydrogen in the presence of a hydrogenation catalyst in a hydrogenation step to generate anthrahydroquinone having an alkyl substituent or 5,6,7,8-tetrahydroanthrahydroquinone having an alkyl substituent (hereinafter, occasionally referred to as an "anthrahydroquinone substance"). Next, in an oxidation step, the anthrahydroquinone substance is inverted back to the anthraquinone substance, and hydrogen peroxide is generated concurrently. The hydrogen peroxide in the working solution is separated from the working solution by water extraction or the like. The working solution deprived of the hydrogen peroxide is returned back to the hydrogenation step. Thus, a circulation process is formed.

### <Problems caused by sub products generated in the circulation process>

While the operation of reducing an anthraquinone substance contained in the working solution used for producing hydrogen peroxide into an anthrahydroquinone substance and then oxidizing the anthrahydroquinone substance into the anthraquinone substance to produce hydrogen peroxide is repeated, substances which do not contribute to the production of hydrogen peroxide, for example, monomer sub products such as tetrahydroanthraquinone epoxide, tetraoxy anthrone, oxy anthrone, anthrone, or the like; solvent-added anthraquinone substances; and polymers of anthraquinone substances are generated. Sub products such as oxides of solvent components are also generated. These components, which are not involved in the production of hydrogen peroxide, are classified as "inert substances". An increase of such an inert substance decreases the concentration of an anthraquinone substance (anthraquinone, tetrahydroanthraquinone), which is an active substance, and thus decreases the capability of each step of the circulation system in an accelerating manner.

For example, when it is intended to maintain the concentration of an "active substance" in the working solution, the concentration of solute components, which is a sum of the concentrations of both the "active" and "inert" substances, increases and thus raises the liquid viscosity or liquid specific gravity. A rise in the liquid viscosity increases the resistance of a filter against liquid passage and thus makes it difficult to obtain a sufficient level of flow rate. A rise in the liquid viscosity also decreases the reaction speed of hydrogenation or oxidation. A rise in the liquid specific gravity decreases the difference in the specific gravity between an oil layer and an aqueous layer and therefore obstructs the generation of a liquid-liquid interface when hydrogen peroxide is to be extracted from the working solution. In addition, when a certain degree of hydrogenation reaction is caused in order to produce a sufficient amount of hydrogen peroxide per unit flow rate, if the concentration of the active substances is relatively low, the hydrogenation ratio relatively increases. This deteriorates the hydrogenation selection ratio, which is a problem caused by a high hydrogenation ratio. Under such circumstances, a working solution for suppressing the concentration of an inert substance to maintain the concentration of an active substance to a sufficiently high level is required.

### <Conventional art for regenerating a working solution and problems thereof>

Known methods for controlling the concentration of an inert substance in a working solution are roughly classified into three types. A first type of methods suppress the generation of a sub product itself to the maximum possible extent. A second type of methods regenerate an anthraquinone substance from a sub product. A third type of methods remove a sub product. The first type of methods include, for example, 1-1. a method of using mild conditions for a circulation system, 1-2. a method of using a hydrogenation catalyst having a high level of selectivity, 1-3. a method of using a chemically stable reaction catalyst, and 1-4. a method of using a chemically stable solvent. The second type of methods include, for example, 2-1. a method of regenerating by γ-alumina, active alumina or the like (Japanese Patent Application Laid-Open No. 9-278419), and 2-2. a method of regenerating by alkali or the like. The third type of methods include, for example, 3-1. a method of removing by distillation, 3-2. a method of removing by deposition or extraction, and 3-3. a method of removing by adsorption using active alumina or the like.

With a first type of method, a time-wise increase of a sub product in a working solution cannot be prevented. In general, a regeneration reaction of a sub product is very slow, and therefore an irreversible sub product is generated. For this reason, it is difficult to prevent a time-wise increase of a sub product in a working solution by a second type of method, or even a combination of a first type of method and a second type of method.

An increase of a sub product causes contamination of a hydrogenation catalyst and thus deteriorates the hydrogenation selectivity, and therefore inhibits the proper performance of a first type of method. An increase of a sub product also causes contamination of a catalyst used in the regeneration reaction of a second type of method. Such contaminated catalysts deteriorate the working solution in combination.

One of the third type of methods of removing a sub product is to distill the working solution.

Japanese Patent Publication for Opposition No. 55-23762 discloses a method including a first-stage distillation of separating a solvent from a working solution and a second-stage distillation of, following the first-stage distillation, separating a light substance, such as an anthraquinone substance or a monoanthracene-based substance, wherein vapor obtained as a distillate by the second-stage distillation is condensed on a liquid membrane of a cool solvent in order to prevent the occlusion caused by crystallization of the distillate (since this patent calls the sub product as a decomposition product, the expression "decomposition product" will be used in the following description).

According to the publication, the working solution contains a solvent, an anthraquinone substance, a heavy decomposition product (polyanthracene), a light decomposition product, and occasionally a hydroxy compound. According to this method, the light decomposition product is useful as a soluble assisting agent for a hydroquinone substance and thus is not removed. This method intends to remove only the hazardous heavy decomposition product. In example 1 of Japanese Patent Publication for Opposition No. 55-23762, 145 g of the distillate contains only 68 g of an anthraquinone substance (active substance), and more than half (53% by weight) of the distillate is the light decomposition product (inert substance). Namely, this method cannot recover the anthraquinone substance, which is an active substance, at a high level of purify

As other methods of the third type of methods, a method of selectively extracting an active substance (Japanese Patent Publication for Opposition No. 4-21602) and a method of selectively extracting an inert substance (Japanese Patent Publication for Opposition No. 5-12281) have been disclosed.

According to Japanese Patent Publication for Opposition No. 4-21602, the working solution is mixed with non-cyclic hydrocarbon and separated into a first layer containing an active substance (non-cyclic hydrocarbon layer) and a second layer containing a large amount of inert substance, thereby performing a purification operation. However, this method requires the non-cyclic hydrocarbon to be removed by distillation after the separation. Because the amount of the non-cyclic hydrocarbon is large, energy-related problems occur.

According to Japanese Patent Publication for Opposition No. 5-12281, the working solution is put into contact with liquefied carbon dioxide and the inert substance is removed by being extracted into the carbon dioxide, thereby performing a purification operation. According to the description of example 1 of this publication, the ratio of the anthraquinone substances in the recovered liquid is 85% by weight, which means the purification is performed up to a sufficiently high level of concentration of active substances. However, since the epoxy derivative, which is an inert substance, is also counted in as an anthraquinone substance, the active substances do not totally occupy 85%, to be accurate. It is presumed that the epoxy derivative is counted in as an anthraquinone substance for a calculation-related reason because the epoxy compound can be changed to an active substance by a regeneration reaction. However, this method has a problem of requiring a high pressure reactor because liquefied carbon dioxide is used and also a problem on how to treat the post-separation liquefied carbon dioxide.

As described above, no method for removing an inert substance simply and efficiently has been found yet, and a method for controlling the concentration of an inert substance in a working solution to be a sufficiently low level is desired to be developed.

### DISCLOSURE OF THE INVENTION

The present inventors found that by recovering an organic solvent by distillation performed at an atmospheric pressure or a lower pressure until the remaining amount of solvent becomes 5% by weight or less, then recovering an anthraquinone substance by distillation performed at a still lower pressure at a temperature of 200°C or higher for a residence time of 6 to 10 hours, reusing all the obtained distillates as a working solution, regeneration from a sub product in the pre-distillation working solution, or conversion of such a sub project into a substance from which regeneration is easily possible, can be performed. The present inventors also found that by treating the working solution obtained from all the distillates with a regeneration catalyst, the distillates are regenerated into anthraquinone substances, which are effective components, and thus a working solution containing a high level of concentration of effective anthraquinone substances is obtained.

Namely, the present invention provides a method for producing hydrogen peroxide, comprising a step of reducing and then oxidizing a working solution containing anthraquinone having an alkyl substituent and tetrahydroanthraquinone having an alkyl substituent to produce hydrogen peroxide; and a working solution regeneration step of removing an inert substance, generated as a sub product by the production of hydrogen peroxide, from the working solution and re-circulating the working solution deprived of the inert substance back into the step of producing hydrogen peroxide; wherein the working solution regeneration step includes i) a first distillation step of recovering the organic solvent by distillation performed at an atmospheric pressure or a lower pressure until the remaining amount of solvent becomes 5% by weight or less; and ii) a second distillation step of, following the first distillation step, recovering the anthraquinone and the tetrahydroanthraquinone by distillation performed at a still lower pressure at a temperature of 200°C or higher for a residence time of 6 to 10 hours.

The method of the present invention further comprises a step of contacting a working solution, prepared using the organic solvent, the anthraquinone and the tetrahydroanthraquinone recovered by the first distillation step and the second distillation step, to a regeneration catalyst. In a preferable embodiment of the present invention, a main component of the regeneration catalyst is alumina or silica alumina. In a preferable embodiment of the present invention, the pressure in the first distillation step is in the range of 1 kPa to 100 kPa. In a preferable embodiment of the present invention, the pressure in the second distillation step is 1 kPa or lower. In a preferable embodiment of the present invention, the temperature in the second distillation step is in the range of 200°C to 300°C.

In a preferable embodiment of the present invention, the alkyl substituent is an amyl group.

According to a preferable embodiment of the present invention, anthraquinone substances, which are active substances, can be efficiently recovered from a working solution having an inert substance accumulated therein, and in addition, a working solution allowing a regeneration reaction to easily proceed can be obtained. As a result, a working solution having a high level of concentration of active substances is obtained, which can maintain the capability of each step of hydrogen peroxide production at a high level.

### BEST MODE FOR CARRYING OUT THE INVENTION

Hereinafter, the present invention will be described in detail. The following embodiments are provided for describing the present invention, and it is not intended to limit the present invention to these embodiments. The present invention may be carried out in various forms without departing from the gist thereof.

A method for producing hydrogen peroxide according to the present invention comprises a step of reducing and then oxidizing a working solution containing an organic solvent, anthraquinone having an alkyl substituent, and tetrahydroanthraquinone having an alkyl substituent to produce hydrogen peroxide; and a working solution regeneration step of removing an inert substance, generated as a sub product by the production of hydrogen peroxide, from the working solution and re-circulating the working solution deprived of the inert substance into the step of producing hydrogen peroxide.

As described above, a solution prepared by dissolving an anthraquinone substance in an organic solvent is called a "working solution".

Anthraquinone having an alkyl substituent used in the present invention may be, for example, ethyl anthraquinone, t-butyl anthraquinone, or amyl anthraquinone. These anthraquinones may be used independently or as a mixture of two or more. Tetrahydroanthraquinone having an alkyl substituent may be, for example, ethyl tetrahydroanthraquinone, t-butyl tetrahydroanthraquinone, or amyl tetrahydroanthraquinone. These tetrahydroanthraquinones may be used independently or as a mixture of two or more.

There is no specific limitation on an organic solvent used for preparing a working solution in the present invention. A preferable organic solvent may be, for example, a combination of an aromatic hydrocarbon and a higher alcohol, a combination of an aromatic hydrocarbon and a carboxylic acid ester of cyclohexanol or alkylcyclohexanol, or a combination of an aromatic hydrocarbon and tetra-substituted urea or cyclic urea.

A method for producing hydrogen peroxide according to the present invention is characterized in that the working solution regeneration step includes i) a first distillation step of recovering the organic solvent by distillation performed at an atmospheric pressure or a lower pressure until the remaining amount of solvent becomes 5% by weight or less; and ii) a second distillation step of, following the first step, recovering the anthraquinone and the tetrahydroanthraquinone by distillation performed at a still lower pressure at a temperature of 200°C or higher for a residence time of 1 hour 6 to 10 hours. The method further comprises a step of contacting a working solution, prepared using the organic solvent, the anthraquinone and the tetrahydroanthraquinone recovered by the first distillation step and the second distillation step, to a regeneration catalyst.

In the first distillation step in the working solution regeneration step according to the present invention, the organic solvent in the working solution is distilled at an atmospheric pressure or a lower pressure. As an apparatus, a generally used distillation apparatus is usable with no specific limitation. Usable apparatuses include, for example, a batch distillation apparatus, a continuous distillation apparatus, a thin film distillation apparatus and the like. A batch distillation apparatus, which is also usable in the second distillation step, is preferable. The temperature and pressure in the first distillation step, which are appropriately selected in accordance with the organic solvent used in the working solution, cannot be specifically defined, but the following conditions are preferably selected. As the pressure, 1 kPa to 100 kPa (atmospheric pressure) is preferable, and 5 to 30 kPa is more preferable. The distillation temperature is determined such that the distillation is continued until the remaining amount of solvent becomes 5% by weight or less. Usually, the first distillation step is regarded as being finished when the temperature is increased by about 50 to 100°C from the temperature of the time when the solvent starts exiting as a distillate. For example, when the solvent starts exiting as a distillate at 130°C under a low pressure of 13 kPa, it is preferable to finish the first distillation step when the temperature reaches 200°C.

In the second distillation step, the anthraquinone substances are distilled at a lower pressure than in the first distillation step. As an apparatus, a batch apparatus is preferable because a residence time of 6 to 10 hours is necessary. Herein, the term "residence time" means a time period from the start until the end of the exit of the distillate (distillate having the lowest boiling point or distillate having the highest boiling point) after the temperature of the distillation pot reaches 200°C. The method for producing hydrogen peroxide according to the present invention encompasses both batch distillation and continuous distillation. The pressure is preferably 1 kPa or lower, and is more preferably 50 to 500 Pa, in order to increase the recovery ratio of the anthraquinone substances. The distillation temperature is 200°C or higher, is preferably in the range of 200°C to 300°C, and is more preferably in the range of 230°C to 280°C. Where the distillation temperature is lower than 200°C, the reaction for regenerating sub products into anthraquinone substances or substances which can be easily regenerated into anthraquinone substances cannot proceed sufficiently. By contrast, where the distillation temperature exceeds 300°C, decomposition products of acidic impurities are generated from residue having a high boiling point and exit as distillates. When a working solution is prepared from the distillates and used for hydrogenation, such decomposition products contaminate the hydrogenation catalyst and thus undesirably decrease the performance of the circulation process. The residence time of distillation needs to be 6 to 10 hours after the temperature reaches 200°C. From the viewpoint of operation, for example, in order to complete all the steps of batch distillation within 24 hours, the residence time is usually preferably in the range of 1 to 10 hours, and is more preferably in the range of 6 to 10 hours. The residue having a high boiling point left in the distillation pot increases the viscosity thereof as the temperature decreases, and is put into a solid state at room temperature. Therefore, it is preferable to recover the residue soon after the distillation while the viscosity thereof is low with the temperature being still high.

By performing distillation at a temperature of 200°C or higher over a residence time of 6 to 10 hours, which is a feature of the present invention, anthraquinone in the initial material liquid almost completely exits the distillation pot as a distillate and is recovered. Tetrahydroanthraquinone is mostly recovered, but a part thereof is recovered after being converted into anthraquinone by a dehydrogenration reaction. Tetrahydroanthraquinone epoxide is considered to have been changed into tetrahydroanthraquinone or a substance which can be changed into anthraquinone easily by the next regeneration reaction treatment. Accordingly, tetrahydroanthraquinone epoxide is scarcely recovered into the distillate liquid. Other sub products cause various reactions and are recovered at a composition ratio which is slightly different from the amount ratio in the initial material liquid.

During the distillation operation, a reaction by which a part of a compound considered to be formed of anthraquinone and a solvent adduct is decomposed into an anthraquinone substance, the solvent and water proceeds. This reaction is considered to be mostly finished at 200°C in 1 hour. As a result, the recovery ratio of the anthraquinone substances by distillation gradually increases, and the recovery ratio of the post-regeneration anthraquinone substances is equal to or greater than the ratio thereof before the regeneration, without the mass being balanced. The decomposition of the solvent adduct can be confirmed to occur during the distillation operation at a temperature of 200°C or higher because the solvent and water gradually accumulate in the cold trap of the vacuum pipe.

Next, the regeneration catalyst contact step of preparing a working solution from the recovered solvent and anthraquinone substances and treating the working solution with a regeneration catalyst to obtain a working solution containing a high content of "active substances" will be described.

First, the solvent recovered in the first distillation step and the anthraquinone substances obtained in the second distillation step are mixed to prepare a working solution. The prepared working solution is passed through a fixed floor or a fluid floor containing a regeneration catalyst to regenerate a part of the decomposition product having a low boiling point into active anthraquinone substances. Since the reaction may not be sufficient after the working solution is passed through the floor only once, it is preferable to pass the working solution in a circulating manner.

The regeneration catalyst used here is preferably active alumina or silica alumina, and is more preferably active alumina. The surface area and the particle diameter of the regeneration catalyst are appropriately selected in accordance with the reaction conditions or the apparatus with no specific limitation. The reaction temperature is preferably in the range of 0°C to 200°C, and is more preferably 50°C to 150°C. As the reaction proceeds, a hydroquinone substance is accumulated and a part of the regeneration reaction becomes slow. Therefore, it is preferable to contact the hydroquinone substance to oxygen or air while the working solution is being passed in a circulating manner to oxidize the hydroquinone substance. This may be performed while hydrogen peroxide generated in this process is sequentially removed.

In the case where active alumina or silica alumina is used as a regeneration catalyst in the hydrogen peroxide production apparatus, the working solution obtained by the distillation may be put into the hydrogen peroxide production apparatus, so that the regeneration reaction is performed while hydrogen peroxide is produced.

Hereinafter, the present invention will be described in more detail by way of specific examples. The present invention is not limited to these examples in any way.

### (Example 1)

The first distillation step of the present invention was performed in a small scale. From the hydrogen peroxide production apparatus, 1000 g of a working solution used for the production of hydrogen peroxide was extracted and used for the experiment. For recovering the solvent in the first step, about 200 g of the working solution was put in advance into a flask of 500 ml included in a distillation pot, and the vacuum degree was controlled to 13 kPa and the temperature was raised from room temperature. When the distillate started exiting, the liquid amount in the flask decreased. Therefore, the working solution was added as necessary and the addition was stopped when a total of 1000 g of the working solution was put into the flask. After the addition of the working solution was stopped, the distillation was continued until the temperature of the distillation pot was raised to 200°C. The solvent was recovered over about 2 hours. The solvent component in the anthraquinone substances left in the flask in the distillation pot was analyzed by GC. As a result, the solvent was found to be contained at 1% or lower, which means that 700 g of the solvent was recovered.

### (Example 2 not covered by the claims).

The second distillation step of the present invention was performed in a small scale. The anthraquinone substances were distilled at a pressure lower than in the first distillation step. After Example 1, a solid of 300 g containing the anthraquinone substances was left in the flask in the distillation pot, and this solid was used for distillation. The pressure in the flask was decreased down to 100 Pa by a vacuum pump, and then the solid was heated. At this point, the solvent component left in a trace amount was removed as a distillate, which influences the vacuum degree. The distillation was performed over 3 hours while the temperature was slowly raised up to a final temperature of 250°C at a pressure of 100 Pa. The obtained distillate was of an amount of 238 g. The solvent and water were captured in a trap in a total amount of 2 g. Contrary to the result of Example 1, this indicates that they were generated during the distillation. The anthraquinone substances in the residue left in the distillation pot were examined by LC. As a result, the solvent was found to be contained at 3% or lower, which means that the target compound was removed by distillation almost completely.

### (Example 3)

The regeneration catalyst contact step of the present invention was performed in a small scale. In order to check the effect of distillation, a working solution was prepared using the anthraquinone substances removed by distillation in Example 2 and the solvent recovered in Example 1. The working solution was adjusted to have the same concentrations as those of the initial working solution, and regeneration was performed using an alumina fixed floor. As the active alumina, 280 g of KHD-12 produced by Sumitomo Chemicals Co., Ltd. was used. The active alumina was passed through the floor at 80°C. The prepared working solution was passed through the floor in a circulating manner at a flow rate of 300 ml/h (contact time with the catalyst: 1 hour) for 12 hours. Oxygen was blown in from a buffer tank. Thus, a target working solution was obtained. The composition of each working solution analyzed by LC is shown below.

**Table 1: Composition of each working solution in Example 3 (% by weight in the solid is shown in the parentheses)**

| | Weight of solid in the working solution | Anthraquinone (A) | Tetrahydroanthraquinone (B) | Epoxy derivative (C) | Unknown | affective components (A+B) |
|---|---|---|---|---|---|---|
| i) Initial working solution | 300 g | 123 g (41%) | 49 g (16%) (41%) | 6 g (2%) | 122 g (41%) | 172 g (57%) |
| ii) Pre-alumina passage | 238 g | 162 g (68%) | 27 g (11%) | 0 g | 49 g (21%) | 189 g (79%) |
| iii) Post-alumina passage | 238 g | 193 g (81%) | 17 g (7%) | 0 g | 28 g (12%) | 210 g (88%) |

As is clear from Table 1, after the initial working solution (i) containing a large content of unknown components is distilled, the content of anthraquinone (A) is increased whereas the content of tetrahydroquinone (B) is decreased in the pre-alumina passage working solution (ii). This is because regeneration into anthraquinone occurred. Moreover, it is appreciated from the content of the effective components (A+B) that in addition to an increase of anthraquinone as a result of regeneration, the total content of the effective components increases beyond the mass balance as a result of decomposition of the solvent adduct or the like. Also in the post-alumina passage working solution (iii) obtained as a result of passing the working solution through the alumina floor, the content of the effective components is increased from 79% to 88%, which indicates that the total content of the effective components increases beyond the mass balance. The working solution obtained in this manner contains a large amount of anthraquinone substances and thus is effectively usable for producing hydrogen peroxide.

### <Comparative example 1>

Substantially the same operation as that in Example 1 was performed to obtain a solid of 300 g containing anthraquinone substances. Next, the anthraquinone substances were distilled in conformity to Example 2, except that a thin film distillation apparatus was used in order to check the difference caused by setting the residence time to be shorter than that of the present invention. The anthraquinone substances were heated to 70°C and put into a dissolved state in advance, and then distilled at 250°C and 100 Pa. The dripping rate was adjusted such that the residence time would be about 10 minutes or shorter. In order to prevent the distillate from being condensed by a condenser, warm water of 80°C was used for the condenser. The obtained distillate was of an amount of 204 g.

This distillate was adjusted to have the same concentration of each substance as that in the initial working solution by a recovery solvent and regeneration was performed in a circulating manner in conformity to Example 3. What should be noted here is that since the amount of the working solution obtained by re-preparation became as small as 680 g, the amount of the catalyst was decreased to 240 g for comparison and the flow rate was set to 257 ml/h. The catalyst contact time was adjusted to be matched to the above. The ratio of the regenerated amount is compared together with the composition thereof.

**Table 2: Composition of each working solution in Comparative example 1 (% by weight in the solid is shown in the parentheses)**

| | Weight of solid in the working solution | Anthraquinone (A) | Tetrahydro-anthraquinone (B) | Epoxy derivative (C) | Unknown | Effective components (A+B) |
|---|---|---|---|---|---|---|
| i) Initial working solution | 300 g | 123 g (41%) | 49 g (16%) | 6 g (2%) | 122 g (41%) | 172 g(57%) |
| iv) Pre-alumina passage | 204 g | 110 g (54%) | 41 g (20%) | 4 g (2%) | 48 g (23%) | 152 g(74%) |
| v) Post-alumina passage | 204 g | 119 g (58%) | 37 g (18%) | 2 g (1%) | 46 g (23%) | 156 g(76%) |

The amount of the distillate obtained by the thin film distillation apparatus having little thermal history was as small as 204 g. As a result of analyzing the anthraquinone substances in the distillation residue obtained at the same time by LC, the anthraquinone substances were found to be left at a ratio of 24% (23 g) in the residue. In this case, the mass is balanced before and after the distillation. The recovery ratio of the anthraquinone substances by the thin film distillation apparatus was about 90%. A comparison of the pre-alumina passage working solution (iv) and the post-alumina passage working solution (v) shows only a slight increase of the content of the effective components.

### <Comparative example 2>

Substantially the same operation as that in Example 1 was performed to obtain a solid of 300 g containing anthraquinone substances. Next, the anthraquinone substances were distilled in conformity to Example 2, except that distillation was performed over 3 hours with a final temperature of 190°C. Since the distillation temperature was low, the amount of the substances decomposed into water or the solvent was small. The amount thereof captured in the trap was also very small. Presumably by the influence of this, the final vacuum degree was 50 Pa or lower. The obtained distillate was of an amount of 210 g. A working solution was prepared and regeneration was performed in a circulating manner in conformity to Example 3. What should be noted here is that since the amount of the working solution obtained by re-preparation became as small as 700 g, the amount of the catalyst was decreased to 247 g for comparison and the flow rate was set to 265 ml/h. The catalyst contact time was adjusted to be matched to the above. The ratio of the regenerated amount is compared together with the composition thereof

**Table 3: Composition of each working solution in Comparative example 2 (% by weight in the solid is shown in the parentheses)**

| | Weight of solid in the working solution | Anthraquinone (A) | Tetrahydro-anthraquinone (B) | Epoxy derivative (C) | Unknown | Effective components (A+B) |
|---|---|---|---|---|---|---|
| i) Initial working solution | 300 g | 123 g (41%) | 49 g (16%) | 6 g(2%) | 122 g (41%) | 172 g (57%) |
| vi) Pre-alumina passage | 21.0 g | 137 g (65%) | 28 g (13%) | 0 g | 46 g (22%) | 166 g (79%) |
| vii) Post-alumina massage | 210 g | 145 g (69%) | 21 g (10%) | 0 g | 44 g (21%) | 166 g (79%) |

By an influence of the temperature, the amount of the anthraquinone substances recovered by distillation is smaller than that in Example 3. A comparison of the pre-alumina passage working solution (vi) and the post-alumina passage working solution (vii) shows that the regeneration reaction proceeded but the amount of the effective components was scarcely changed.

### <Comparative example 3>

In order to check the effect of distillation, the working solution was passed through the alumina catalyst in a circulating manner in conformity to Example 3 without performing distillation. The amount of the working solution was 739 g in conformity to Example 3.

**Table 4: Composition of each working solution in Comparative example 3 (% by weight in the solid is shown in the parentheses)**

| | Weight of solid in the working solution | anthraquinone (A) | Tetrahydro-anthraquinone (B) | Epoxy derivative (C) | Unknown | Effective components (A+B) |
|---|---|---|---|---|---|---|
| i) Initial working solution | 238 g | 98 g (41%) | 39 g (16%) | 5 g (2%) | 97 g (41%) | 136 g(57%) |
| ix) Post-alumina passage | 238 g | 110 g (65%) | 34 g (13%) | 0 g | 95 g (40%) | 144 g(60%) |

When a working solution was regenerated by merely passing the initial working solution through the alumina catalyst in a circulating manner, the amount of the effective components of anthraquinone and the like was slightly increased by a regeneration reaction of an epoxy derivative. However, the working solution was not sufficiently regenerated by this step only. The amount of the regenerated working solution was essentially not significantly different from that of comparative example 1 or 2 obtained by passing the working solution through the alumina catalyst.

### (Example 4)

A solvent component was recovered from 20 L of a working solution by an experimental apparatus having the same structure as that of Example 1, except that the flask was scaled up to 10 L. Unlike in Example 1, a mantle heater was used instead of the oil bath and the diameter of the pipe was increased so as to match the size of the flask. Like in Example 1, 3 L of the working solution was put in advance into the flask, and the vacuum degree was controlled to 13 kPa and the temperature was raised from room temperature. When the distillate started exiting, the liquid amount in the flask decreased. Therefore, the working solution was added as necessary and the addition was stopped when a total of 20 L (18.6 kg) of the working solution was put into the flask. After the addition of the working solution was stopped, the distillation was continued until the temperature of the distillation pot was raised to 200°C. The solvent was recovered over about 8 hours. The solvent component in the anthraquinone substances left in the flask in the distillation pot was analyzed by GC. As a result, the solvent was found to be contained at 1% or lower, which means that 13 kg of the solvent was recovered. Then, the second distillation step was performed using 5.6 kg of the anthraquinone substances left in the flask in the distillation pot. The second distillation step was performed in conformity to Example 2 except that an apparatus having a higher vacuum pump capability was used so as to match the size of the flask. The distillation was performed over 6 hours until final conditions of 250°C and 100 Pa were obtained. The anthraquinone substances were recovered in an amount of 4.4 kg. The flask, which was a receiver, was heated in a hot water bath to dissolve the contents thereof, and then the recovered solvent was added thereto. The resultant substance was adjusted to have the same concentration as that in the working solution used here (300 g solid component/L working solution). As a result, 14.7 kg of a working solution was obtained.

The above-described operation was performed three times, and about 47 L of the working solution was obtained in total.

### (Example 5)

45 L of the working solution prepared in Example 4 was driven in a circulating manner to check a change in the composition of the working solution. The compositions before and after the working solution was driven for 30 days using the continuous circulation system are compared bellow.

**Table 5: Composition of each working solution in Example 5 (% by weight in the solid is shown in the parentheses)**

| | Weight of solid in the working solution | Anthraquinone (A) | Tetrahydro-anthraquinone (B) | Epoxy derivative (C) | Effective components (A+B) |
|---|---|---|---|---|---|
| x) Initial working solution | 279 g/L | 0.43 mol/L (43%) | 0.16 mol/L (16%) | 0.02 mol/L (2%) | 0.59 mol/L (59%) |
| xi) Pre-continuous driving | 279 g/L | 0.70 mol/L (70%) | 0.1 mol/L (11%) | 0.0 mol/L (0%) | 0.81 mol/L (81%) |
| xii) Post-continuous driving | 279 g/L | 0.75 mol/L (75%) | 0.09 mol/L (9%) | 0.01 mol/L (1%) | 0.84 mol/L (84%) |

The capability of producing hydrogen peroxide of the post-continuous driving working solution (xii) was increased to 130% with respect to the capability of producing hydrogen peroxide of the pre-distillation working solution (x).

### <Comparative example 4>

The initial working solution used in Example 4 (without distillation) was subjected to continuous driving like in Example 5 using the same apparatus. A change in the composition after the working solution was driven for 30 days continuously is shown below.

**Table 6: Composition of each working solution in Comparative example 4 (% by weight in the solid is shown in the parentheses)**

| | Weight of solid in the working solution | Anthraquinone (A) | Tetrahydro-Anthraquinone (B) | Epoxy derivative (C) | Effective components (A+B) |
|---|---|---|---|---|---|
| x) Initial working solution | 279 g/L | 0.43 mol/L (43%) | 0.16 mol/L (16%) | 0.02 mol/L (2%) | 0.59 mol/L (59%) |
| xiii) Post-continuous driving | 279 g/L | 0.40 mol/L (40%) | 0.16 mol/L (16%) | 0.04 mol/L (4%) | 0.56 mol/L (56%) |

The content of the effective components was decreased by the continuous driving. When only the regeneration step using alumina was performed as in the state of the post-continuous driving (xiii), the content of the effective components in the working solution showed a tendency of decreasing, and the capability of producing hydrogen peroxide was also decreased in proportion thereto.

## Claims

1. A method for producing hydrogen peroxide, comprising:
a step of reducing and then oxidizing a working solution containing an organic solvent, anthraquinone having an alkyl substituent, and tetrahydroanthraquinone having an alkyl substituent to produce hydrogen peroxide;
a working solution regeneration step of removing an inert substance, generated as a sub product by the production of hydrogen peroxide, from the working solution and re-circulating the working solution deprived of the inert substance back into the step of producing hydrogen peroxide; and
a step of contacting a working solution, prepared using the organic solvent, the anthraquinone and the tetrahydroanthraquinone recovered by the first distillation step and the second distillation step, to a regeneration catalyst;
wherein the working solution regeneration step includes:
i) a first distillation step of recovering the organic solvent by distillation performed at an atmospheric pressure or a lower pressure, until the remaining amount of solvent becomes 5% by weight or less; and
ii) a second distillation step of, following the first distillation step, recovering the anthraquinone and the tetrahydroanthraquinone by distillation performed at a still lower pressure at a temperature of 200°C or higher for a residence time of 6 to 10 hours.

2. The method for producing hydrogen peroxide according to claim 1, wherein a main component of the regeneration catalyst is alumina or silica alumina.

3. The method for producing hydrogen peroxide according to claim 1 or 2, wherein the pressure in the first distillation step is in the range of 1 kPa to 100 kPa.

4. The method for producing hydrogen peroxide according to any one of claims 1 through 3, wherein the pressure in the second distillation step is 1 kPa or lower.

5. The method for producing hydrogen peroxide according to any one of claims 1 through 4, wherein the temperature in the second distillation step is in the range of 200°C to 300°C.

6. The method for producing hydrogen peroxide according to any one of claims 1 through 5, wherein the alkyl substituent is an amyl group.

## Patentansprüche

1. Ein Verfahren zur Herstellung von Wasserstoffperoxid, umfassend:
einen Schritt zur Reduktion und anschließender Oxidation einer Arbeitslösung enthaltend ein organisches Lösungsmittel, Anthrachinon mit einem Alkylsubstituenten, und Tetrahydroanthrachinon mit einem Alkylsubstituenten, zur Herstellung von Wasserstoffperoxid;
einen Schritt zur Regeneration der Arbeitslösung durch Entfernen einer inerten Substanz, welche als Nebenprodukt bei der Herstellung von Wasserstoffperoxid gebildet wird, aus der Arbeitslösung, und Rückführung der Arbeitslösung, aus welcher die inerte Substanz entfernt wurde, zurück in den Schritt der Herstellung von Wasserstoffperoxid; und
einen Schritt des In-Kontakt-Bringens einer Arbeitslösung, hergestellt aus dem organischen Lösungsmittel, dem Anthrachinon und dem Tetrahydroanthrachinon, welche durch den ersten Destillationsschritt und den zweiten Destillationsschritt zurückgewonnen wurden, mit einem Regenerationskatalysator;
wobei der Schritt zur Regeneration der Arbeitslösung umfasst:
i) einen ersten Destillationsschritt zur Rückgewinnung des organischen Lösungsmittels durch Destillation bei Atmosphärendruck oder einem niedrigeren Druck bis der Restgehalt des Lösungsmittels 5 Gew.-% oder weniger ist; und
ii) einen zweiten Destillationsschritt im Anschluss an den ersten Destillationsschritt, zur Rückgewinnung des Anthrachinons und des Tetrahydroanthrachinons durch Destillation bei einem noch niedrigeren Druck bei einer Temperatur von 200°C oder höher mit einer Verweilzeit von 6 bis 10 Stunden.

2. Das Verfahren zur Herstellung von Wasserstoffperoxid gemäß Anspruch 1, wobei ein Hauptbestandteil des Regenerationskatalysators Aluminiumoxid oder Siliziumdioxid-Aluminiumoxid ist.

3. Das Verfahren zur Herstellung von Wasserstoffperoxid gemäß Anspruch 1 oder 2, wobei der Druck in dem ersten Destillationsschritt in einem Bereich von 1 kPa bis 100 kPa liegt.

4. Das Verfahren zur Herstellung von Wasserstoffperoxid gemäß irgendeinem der Ansprüche 1 bis 3, wobei der Druck in dem zweiten Destillationsschritt 1 kPa oder niedriger ist.

5. Das Verfahren zur Herstellung von Wasserstoffperoxid gemäß irgendeinem der Ansprüche 1 bis 4, wobei die Temperatur in dem zweiten Destillationsschritt in einem Bereich von 200°C bis 300°C liegt.

6. Das Verfahren zur Herstellung von Wasserstoffperoxid gemäß irgendeinem der Ansprüche 1 bis 5, wobei der Alkylsubstituent eine Amylgruppe ist.

## Revendications

1. Procédé de production de peroxyde d'hydrogène, comprenant :
une étape de réduction puis d'oxydation d'une solution de travail contenant un solvant organique, de l'anthraquinone ayant un substituant alkyle, et du tétrahydroanthraquinone ayant un substituant alkyle pour produire du peroxyde d'hydrogène ;
une étape de régénération de solution de travail consistant à éliminer une substance inerte, générée en tant que sous-produit par la production de peroxyde d'hydrogène, de la solution de travail et à recycler la solution de travail dépourvue de la substance inerte dans l'étape de production de peroxyde d'hydrogène ; et
une étape de mise en contact d'une solution de travail, préparée en utilisant le solvant organique, l'anthraquinone et le tétrahydroanthraquinone récupérés par la première étape de distillation et la seconde étape de distillation, avec un catalyseur de régénération ;
dans lequel l'étape de régénération de la solution de travail comprend :
i) une première étape de distillation consistant à récupérer le solvant organique au moyen d'une distillation réalisée à une pression atmosphérique ou une pression plus basse, jusqu'à ce que la quantité résiduelle de solvant soit de 5% en poids ou moins ; et
ii) une seconde étape de distillation, suivant la première étape de distillation, consistant à récupérer l'anthraquinone et le tétrahydroanthraquinone au moyen d'une distillation réalisée à une pression encore plus basse à une température supérieure ou égale à 200°C pendant un temps de séjour de 6 à 10 heures.

2. Le procédé de production de peroxyde d'hydrogène selon la revendication 1, dans lequel un composant principal du catalyseur de régénération est l'alumine ou la silice-alumine.

3. Le procédé de production de peroxyde d'hydrogène selon la revendication 1 ou 2, dans lequel la pression dans la première étape de distillation est dans la plage de 1 kPa à 100 kPa.

4. Le procédé de production de peroxyde d'hydrogène selon l'une quelconque des revendications 1 à 3, dans lequel la pression dans la seconde étape de distillation est inférieure ou égale à 1 kPa.

5. Le procédé de production de peroxyde d'hydrogène selon l'une quelconque des revendications 1 à 4, dans lequel la température dans la seconde étape de distillation se trouve dans la plage de 200°C à 300°C.

6. Le procédé de production de peroxyde d'hydrogène selon l'une quelconque des revendications 1 à 5, dans lequel le substituant alkyle est un groupe amyle.
